# EUROPÄISCHE PATENTANMELDUNG

(11) **EP 1 176 526 A2**
(43) Veröffentlichungstag der Anmeldung: **30.01.2002**
(21) Anmeldenummer: 01117451.3
(22) Anmeldetag: 19.07.2001
(51) Int. Cl.: G06F 17/60

(54) **Verfahren zur Identifizierung eines Reisenden vor/bei der Reise und Vorrichtung zur Durchführung des Verfahrens**

(30) Priorität: 26.07.2000 DE 10036663
(71) Anmelder: ICN Ingenieurgesellschaft für Computer- und Netzwerktechnik mbH & Co.KG, 44227 Dortmund (DE)
(72) Erfinder: Mäsing, Jörg, 45525 Hattingen (DE)
(74) Vertreter: COHAUSZ HANNIG DAWIDOWICZ & PARTNER

(57) **Zusammenfassung**

Die Erfindung betrifft ein Verfahren zur Identifizierung eines Reisenden bei der Wahrnahme von Reisedienstleistungen, umfassend folgende Schritte: a) die berührungslose Erfassung der Identitätsdaten des Reisenden durch ein Lesegerät am Abreiseort, b) die Zuordnung der Identitätsdaten zu Personendaten des Reisenden, die in einer Reisebuchungsdatenbank abgelegt sind, c) die Wiedergabe der Personendaten des Reisenden, d) ggf. Hinweise an den Reisenden und weiterhin eine Vorrichtung zur Durchführung des Verfahrens, enthaltend eine Identitätsdaten-Lesevorrichtung, die die Identitätsdaten eines identitätsdatensenders berührungsfrei erfaßt, wobei die Lesevorrichtung mit einer Auswertevorrichtung (3) verbunden ist, die die Identitätsdaten weiteren Daten, insbesondere einem Namen und / oder einem Bild und einer Reisebuchung zuordnet, wenigstens ein Datenwiedergabegerät.

## Beschreibung

Die vorliegende Erfindung betrifft ein Verfahren zur Identifizierung eines Reisenden vor / bei Durchführung einer Reise sowie eine Vorrichtung, insbesondere zur Durchführung des Verfahrens nach den Oberbegriffen der unabhängigen Patentansprüche.

Es ist bekannt, am Abreiseort, beispielsweise in Flughäfen, TLT d.h. Ticket Less Travel -Systeme zum Einchecken zu verwenden. Dies erfolgt üblicherweise mittels einer Kreditkarte oder mittels persönlicher Kundenkarten, die von den Airlines herausgegeben werden.

Derartige nicht berührungslose Identifizierungssysteme bei der Wahrnahme von Reisedienstleistungen haben allerdings den Nachteil, dass die Terminals, sofern sie nicht gerade defekt sind, meist durch das Einchecken anderer Reisender besetzt sind und so für den Reisenden gegenüber dem traditionellen Einchecken am Counter keine Zeitvorteile bieten.

Auch berührungslose Identifizierungssysteme sind bekannt. Unter www.kababenzing.com/DE/news/legschl.html findet man den von der KABA BENZING GmbH vertriebenen Kaba Legic Schlüssel, der einen stark verkleinerten Antennenprint und einen entsprechned modifizierten Schlüsselchip enthält. Hiermit kann eine Verbindung zur Zugriffskontrolle, Zeitwirtschaft und zum Wertehandling hergestellt werden. Es können so beim Wertehandling offenbar nicht berührungslos Geldwerte über einen Automaten auf den Schlüssel gebucht werden, die beispielsweise bei einem Kaffeeautomaten bei der Entnahme eines Getränks wieder nach und nach abgebucht werden.

Der vorliegenden Erfindung liegt somit die Aufgabe zugrunde, ein neues Verfahren zur berührungslosen Identifizierung eines Reisenden bei der Wahrnahme von Reisedienstleistungen zur Verfügung zu stellen.

Diese Aufgabe wird dadurch gelöst, dass dieses Verfahren folgende Schritte umfasst:
a) die berührungslose Erfassung der Identitätsdaten des Reisenden durch ein Lesegerät am Abreiseort,
b) die Zuordnung der Identitätsdaten zu Personendaten des Reisenden, die in einer Reisebuchungsdatenbank abgelegt sind,
c) die Wiedergabe der Personendaten des Reisenden,
d) ggf. Hinweise an den Reisenden.

Die Erfindung betrifft somit ein Verfahren zur Identifizierung eines Reisenden bei der Wahrnahme von Reisedienstleistungen, umfassend folgende Schritte:
a) die berührungslose Erfassung der Identitätsdaten des Reisenden durch ein Lesegerät am Abreiseort,
b) die Zuordnung der Identitätsdaten zu Personendaten des Reisenden, die in einer Reisebuchungsdatenbank abgelegt sind,
c) die Wiedergabe der Personendaten des Reisenden,
d) ggf. Hinweise an den Reisenden.

Nach einer bevorzugten Ausführungsform des Verfahrens die Wiedergabe der Per-sonendaten des Reisenden durch Wiedergabe des Namens und / oder akustisch und / oder durch Bildwiedergabe auf dem Wiedergabegerät.

Nach einer weiteren bevorzugten Ausführungsform des Verfahren erfolgt die Wiedergabe der Personendaten des Reisenden an Mitarbeiter des Reiseanbieters und / oder den Reisenden.

Unter Mitarbeiter des Reiseanbieters im Sinne der vorliegenden Erfindung werden auch Zollbeamte oder ähnliche nicht direkt beim Reiseanbieters beschäftigten Personen verstanden, die mit dem Reisenden während der Reise in Kontakt treten.

Nach einer bevorzugten Ausführungsform werden die nach Betreten des Abreiseortes fällige Kosten, beispielsweise für Übergepäck oder Sondergepäck, wie Tiere, Sportgerät durch den Reisenden über einen über eine Mobilfunknummer erreichbaren Mobile Voice system in Form eines Zahlungsserver, insbesondere das PayBox.net-System entrichtet. Dieses System wurde von der Paybox.net AG in Wiesbaden begründet, mit dem seit Mitte April 2000 auch Mobiltelefonbesitzer mit größerer Sicherheit Zahlungen tätigen können.

Nachdem man Mitglied beim Paybox-System geworden ist, beispielsweise indem man unter www.paybox.de im Internet die Einrichtung beantragt hat, erhält man nach Zahlung einer Gebühr von DM 5,00 bis DM 10,00 (bzw. 3 bis 6 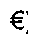 ) pro Jahr mit der Bestätigung der Freischaltung eine persönliche Paybox PIN (Geheimnummer) und kann sofort mit seinem Handy in folgender Weise beim Internet bezahlen:

Nachdem man Kosten am Abreiseort verursacht hat, wählt man an einem Display die Zahlungsoption "Paybox Zahlen per Handy", wird von Mitarbeitern des Reiseanbieters oder in automatisierter Weise gebeten, seine Mobiltelefonnummer Nummer anzugeben und die Bestellung per Mausklick zu bestätigen. Daraufhin ruft die Paybox über die Mobiltelefonnummer Nummer des Reisenden zurück und bittet um Bestätigung des Betrags x an den Reiseanbieter. Zur Bestätigung gibt der Reisende seine Paybox Pin am Mobiltelefon ein. Die Paybox bestätigt die Transaktion, wobei für Telefon und Transaktion keine Kosten anfallen. Der gesamte Zahlungsvorgang hierzu dauert weniger als 30 Sekunden.

Nach einer bevorzugten Ausführungsform handelt es sich bei den Reisedienstleistungen um wenigstens eine Dienstleistung, die ausgewählt ist aus der Gruppe bestehend aus Land-, Wasser- und / oder Luftreisen. Unter Landreisen versteht man beispielsweise Reisen mit nicht motorkraftbetriebenen Fahrzeugen, wie Fahrrädern, Pferdewagen, mit Kraftfahrzeugen und Krafträdern wie Pkws, Bussen, Lastkraftwagen, Motorrädern, den Fahrzeugen des öffentlichen Nahverkehrs, wie Straßenbahn, Eisenbahn, Bergbahn, Bus.

Unter Wasserreisen versteht man beispielsweise Reisen mit Wasserfahrzeugen, wie Ruder-, Paddel-, Segel- und Motorbooten und Motorschiffen.

Unter Luftreisen versteht man beispielsweise Reisen mit Flugzeugen, Hubschraubern, Zeppelinen und sonstigen Ballonfahrzeugen, Segelflugzeugen, Raketen und Raumfähren.

Nach einer bevorzugten Ausführungsform handelt es sich bei der Reisedienstleistung um eine Einzel- und */* oder Hin- und Rückreise und / oder Rundreise.

Nach einer weiteren bevorzugten Ausführungsform ist die Reisedienstleistung eine Flugreise, umfassend folgende Schritte:
a) die berührungslose Erfassung der Identitätsdaten des Reisenden durch ein Lese gerät innerhalb des Flughafens,
b) die Zuordnung der Identitätsdaten zu Personendaten des Flugreisenden,
c) die Wiedergabe der Personendaten des Flugreisenden,
c1) ggf. an der Sicherheitsschleuse an das Sicherheitspersonal,
c2) ggf. an den Zoll bei Auslandsflügen / außerhalb der EU,
c3) ggf. bei der Gepäckaufgabe für die Gepäckkennzeichnung,
d) ggf. Hinweis an den Flugreisenden über die Entrichtung fälliger Kosten für Übergepäck; Entrichtung über einen Zahlungsserver,
c4) die Wiedergabe der Personendaten des Flugreisenden am Flugzeugeinstieg und der Sitzplatznummer, Ausschalten des Handies,
c5) ggf. am Reisezielort die Wiedergabe der Personendaten des Flugreisenden bei der Gepäckabholung mit Überprüfung der Gepäckkennzeichnung und Zuweisung.

Die Gepäckkennzeichnung im Sinne der vorliegenden Erfindung wird auf einem geeigneten flexiblen Trägern ausgegeben und ggf. zusammen mit einem Barcode ausgedruckt. Dies dient dazu, nach dem Landen bei der Aufnahme des Gepäcks am Zielort durch Lesevorrichtungen oder visuell auch Prüfen zu können, ob der Träger des Identitätsdatensenders mit dem barkodierten Gepäckstücken identisch ist, und so weitesgehend Verwechslungen und Diebstahl von Gepäck zu vermeiden.

Nach einer weiteren bevorzugten Ausführungsform ist diese Reisedienstleistung eine Schiffsreise, umfassend folgende Schritte:
a) die berührungslose Erfassung der Identitätsdaten des Reisenden durch ein Identitätsdaten-Lesegerät innerhalb des Hafens,
b) die Zuordnung der Identitätsdaten zu Personendaten des Schiffsreisenden,
c) die Wiedergabe der Personendaten des Schiffsreisenden,
c1) ggf. an der Sicherheitsschleuse an das Sicherheitspersonal,
c2) ggf. an den Zoll bei Auslandsschifffahrten / außerhalb der EU,
c3) ggf. bei der Gepäckaufgabe für die Gepäckkennzeichnung,
d) ggf. Hinweis an den Schiffsreisenden über die Entrichtung fälliger Kosten für Übergepäck, Entrichtung über ein mobile Voice System,
c4) die Wiedergabe der Personendaten des Schiffsreisenden an / in der Nähe der Gangway und der Kabinennummer / Sitzplatznummer,
c5) ggf. am Reisezielort die Wiedergabe der Personendaten des Schiffsreisenden bei. der Gepäckabholung mit Überprüfung der Gepäckkennzeichnung und Zuweisung.

Nach einer weiteren bevorzugten Ausführungsform ist die Reisedienstleistung eine Bahnreise, umfassend folgende Schritte:
a) die berührungslose Erfassung der Identitätsdaten des Reisenden durch ein Iden titätsdaten-Lesegerät innerhalb des Bahnhofs,
b) die Zuordnung der Identitätsdaten zu Personendaten des Bahnreisenden,
c) die Wiedergabe der Personendaten des Bahnreisenden,
c1) ggf. bei der Gepäckaufgabe für die Gepäckkennzeichnung,
d) ggf. Hinweis an den Bahnreisenden über die Entrichtung fälliger Kosten für Über gepäck; Sondergepäck; Entrichtung über ein Mobile Voice System,
c2) die Wiedergabe der Personendaten des Bahnreisenden am Zugeinstieg und der Wagennummer / Sitzplatznummer,
c3) ggf. am Reisezielort die Wiedergabe der Personendaten des Bahnreisenden bei der Gepäckabholung mit Überprüfung der Gepäckkennzeichnung und Zuweisung.

Nach einer weiteren bevorzugten Ausführungsform handelt es sich bei der Reisedienstleistung um eine Reise im öffentlichen Nahverkehr, umfassend folgende Schritte:
a) die berührungslose Erfassung der Identitätsdaten des Reisenden durch ein Identitätsdaten-Lesegerät innerhalb des Nahverkehrhaltepunktes,
b) die Zuordnung der Identitätsdaten zu Personendaten des Reisenden,
c) die Wiedergabe der Personendaten des Reisenden,
c1) ggf. bei der Gepäckaufgabe für die Gepäckkennzeichnung,
d) ggf. Hinweis an den Reisenden über die Entrichtung fälliger Kosten für Übergepäck, Sondergepäck; Entrichtung über ein mobile Voice system,
c2) die Wiedergabe der Personendaten des Reisenden am Einstieg und der Sitzplatznummer / Wagennummer,
c3) ggf. am Reisezielort die Wiedergabe der Personendaten des Reisenden bei der Gepäckabholung mit Überprüfung der Gepäckkennzeichnung und Zuweisung.

Nach einer bevorzugten Ausführungsform ist diese Reisedienstleistung eine Reise im öffentlichen Nahverkehr, umfassend folgende Schritte:
a) die berührungslose Erfassung der Identitätsdaten des Reisenden durch ein Iden titätsdaten-Lesegerät innerhalb des Nahverkehrhaltepunktes,
b) die Zuordnung der Identitätsdaten zu Personendaten des Reisenden,
c) die Wiedergabe der Personendaten des Reisenden,
c1) ggf. bei der Gepäckaufgabe für die Gepäckkennzeichnung,
d) ggf. Hinweis an den Reisenden über die Entrichtung fälliger Kosten für Übergepäck, Sondergepäck; Entrichtung über ein Mobile Voice System,
c2) die Wiedergabe der Personendaten des Reisenden am Einstieg und der Sitzplatznummer / Wagennummer,
c3) ggf. am Reisezielort die Wiedergabe der Personendaten des Reisenden bei der Gepäckabholung mit Überprüfung der Gepäckkennzeichnung und Zuweisung.

Der vorliegenden Erfindung liegt weiter die Aufgabe zugrunde, ein neues Verfahren zur berührungslosen Identifizierung eines Reisenden vor der Wahrnahme von Reisedienstleistungen zur Verfügung zu stellen.

Diese Aufgabe wird dadurch gelöst, dass dieses Verfahren folgende Schritte umfasst:
- eine Buchungsabfrage beim Reiseanbieter mittels Mobiltelefon,
- eine Antwort des Reisenden per Voice und / oder per Tastatur,
- ein Preisangebot des Reiseanbieters per Voice und / oder per Computer,
- eine Angebotsannahme durch Bestätigung des Reisenden durch Eingabe einer Geheimzahl,
- die Bestätigung der Reiseart, der Reisezeit und sonstiger Informationen zur Reise per SMS und / oder Voice,
- die Abbuchung des Reisepreises von Konto des Reisenden,
- die Einspeisung der Buchungsinformationen in eine zentrale und / oder lokale Buchungsdatenbank.
- ggf. die Übersendung der Buchungsunterlagen.

Diese weitere Ausprägung der vorliegenden Erfindung betrifft somit Verfahren zur Identifizierung eines Reisenden, welches bei dem die Wahrnehmung der Reisedienstleistung weiterhin vor dem Reiseantritt folgende Schritte umfasst:
- eine Buchungsabfrage beim Reiseanbieter mittels Mobiltelefon,
- eine Antwort des Reisenden per Voice und / oder per Tastatur,
- ein Preisangebot des Reiseanbieters per Voice und / oder per Computer,
- eine Angebotsannahme durch Bestätigung des Reisenden durch Eingabe einer Geheimzahl,
- die Bestätigung der Reiseart, der Reisezeit und sonstiger Informationen zur Reise per SMS und / oder Voice,
- die Abbuchung des Reisepreises von Konto des Reisenden,
- die Einspeisung der Buchungsinformationen in eine zentrale und / oder lokale Buchungsdatenbank.
- ggf. die Übersendung der Buchungsunterlagen.

Der vorliegenden Erfindung liegt weiterhin die Aufgabe zugrunde, eine Vorrichtung zur Durchführung des Verfahrens der vorgenannten Art zur Verfügung zu stellen.

Sie betrifft somit eine Vorrichtung, insbesondere zur Durchführung des Verfahrens zur Wahrnahme von Reisendienstleistungen, enthaltend folgende Bestandteile:
- eine Identitätsdaten-Lesevorrichtung,
- die die Identitätsdaten eines Identitätsdatensenders berührungsfrei erfasst,
- wobei die Lesevorrichtung mit einer Auswertevorrichtung verbunden ist, die die Identitätsdaten weiteren Daten, insbesondere einem Namen und / oder einem Bild und einer Reisebuchung zuordnet,
- wenigstens ein Datenwiedergabegerät.

Die Identitätsdaten-Lesevorrichtung ist so vorgesehen, dass sie in einem Abstand von mindestens 2 m, vorzugsweise 1 m, insbesondere von 0,5 bis 0,2 m zum Träger des Identitätsdatensenders angeordnet ist, nach Möglichkeit oberhalb, unterhalb oder seitlich.

Nach einer weiteren bevorzugten Ausführungsform ist die Lesevorrichtung mit den Datenwiedergabegeräten mittels Draht oder drahtlos über elektromagnetische Wellen im Funk-, UV- oder IR-Bereich verbunden.

Nach einer weiteren bevorzugten Ausführungsform enthält die Lesevorrichtung einen Scanner.

Nach einer weiteren bevorzugten Ausführungsform korrespondiert die Lesevorrichtung mit einen aktiven und / oder passiven in einem Mobiltelefon angeordneten Sender, der kontinuierlich und / oder diskontinuierlich Identitätsdaten abstrahlt.

Unter einem aktiven Sender im Sinne der vorliegenden Erfindung, der diskontinuierlich Identitätsdaten abstrahlt, versteht man beispielsweise ein Mobiltelefon, mit welchem man über eine spezielle Tastenkombination am Reiseort eincheckt.

Unter einem aktiven Sender im Sinne der vorliegenden Erfindung, der kontinuierlich Identitätsdaten abstrahlt, versteht man beispielsweise ein Mobiltelefon, mit dem man unter Zuhilfenahme eines Mobile Voice Systems eincheckt.

Unter einem passiven Sender im Sinne der vorliegenden Erfindung, der diskontinierlich Identitätsdaten abstrahlt, versteht man beispielsweise eine ein oder mehrere sekundenintervallmäßige Abfrage des Mobiltelefonidentitätsdaten durch das Lesegerät.

Unter einem passiven Sender im Sinne der vorliegenden Erfindung, der kontinuierlich Identitätsdaten abstrahlt, versteht man beispielsweise die ständige Abfrage von neuen Identitätsdaten des Mobiltelefons durch das Lesegerät im Empfangsbereich.

Nach einer bevorzugten Ausführungsform handelt es sich bei den Identitätsdaten um die Mobilfunknummer und / oder ein Signal auf Basis von Zahlen oder Buchstaben, ähnlich wie beim KABA Legic Schlüssel.

Nach einer weiteren bevorzugten Ausführungsform enthält die Auswertevorrichtung eine Datenbank, die auf eine zentrale und / oder lokale Reisebuchungsdatenbank zugreift.

Nach einer bevorzugten Ausführungsform enthalten die Datenwiedergabegeräte festinstallierte oder portable LED- oder TFT-Displays und / oder Drucker. Bevorzugt werden die portablen Displays von Mitarbeitern des Reiseanbieters am Körper getragen, beispielsweise in Form von Shnurlostelefonen, Mobiltelefonen oder als Organizer mit eingebautem Modem, vorzugsweise werden sie aber am Arm getragen.

Schließlich betrifft die vorliegende Erfindung eine Vorrichtung zur Durchführung des Verfahren vor Reiseantritt, enthaltend folgende Bestandteile:
- eine Identitätsdaten-Lesevorrichtung,
- einen anwählbaren zentralen und / oder lokalen Reiseanbieterserver mit einer Buchungsdatenbank,
- ein Mobiltelefon, welches Identitätsdaten aussendet und empfängt,
und ein Mobile Voice System.

Nach einer bevorzugten Ausführungsform ist der lokale Reiseserver am Abreiseort / Ankunftsort und / oder am Sitz des Reiseanbieters angeordnet.

Bei dem Mobile Voice System handelt es sich beispielsweise um ein ENVOX-system, wie es u.a. im Paybox-System eingesetzt wird und dazu dient Textinformation in Sprache und Sprachinformation in Text umzuwandeln.

Die vorliegende Erfindung wird nun durch ein Ausführungsbeispiel beispielhaft für die Anwendung am Flughafen näher erläutert.

| Aktion | Art und Weise |
|---|---|
| **Vor dem Reiseantritt:** | |
| Anfrage über eine Buchung von Flügen über das Handy | |
| Abfrage seitens des Anbieters (z.B. Airline Reisebüro) | Voice / computergesteuert |
| Antwort des Anrufers | Tastatur oder Voice |
| Angebot des Anbieters (Preis pro Flug) | Voice / computergesteuert |
| Annahme des Angebotes durch | Bestätig. mit der TLT PIN |
| Bestätigung des Fluges, Flugzeit, Gate, Sitzes | per SMS / Voice |
| Abbuchung des Preises vom Girokonto über bekannte Wege | |
| | |

| **Bei Wahrnehmung der Reise am Flughafen** | |
|---|---|
| | |
| Das Signal des Handies (bin Telefon Nr. XYZ) wird an verschiedenen Empfangsstationen des Flughafens empfangen - eine Datenbankabfrage gibt an den jeweiligen Stellen die notwendigen Informationen | |
| *an der Sicherheitsschleuse-* | ja - ist Passagier mit Nr. XYZ |
| (zusätzlich bei Auslandsflügen Passportcheck) | |
| *am Gate* - | ja - ist Passagier mit Nr. XYZ, Name |
| | |
| *Gepäckaufgabe* | ja - ist Passagier mit Nr. XYZ ,Name Kennzeichnung des Gepäcks-falls not-wendig wird hier ein Mehrpreis für Übergewicht direkt per Paybox bez. |
| | |
| *im Flugzeug -* | ja - ist Passagier mit Nr. XYZ -Anzeige des Sitzplatzes |
| | |
| *Abschalten des Handies* | |
| | |

| **Flug** | |
|---|---|
| | |
| *Gepäckabholung* | ja - ist Passagier mit der Nr. XYZ- Überprüfung der Kennzeichnung des Gepäcks- mit der ID-Zuweisung des Gepäckstücks |

### Rückflug dito

Die vorliegende Erfindung wird weiterhin anhand einer Figur beispielhaft näher erläutert.

Hierbei werden, durch Ziffern angedeutet, folgende Schritte unter Einsatz des erfindungsgemäßen Verfahrens und der Vorrichtung durchlaufen:
1 Flug buchen
2 per SMS bestätigen
3 Check in per Mobiltelefon
4 Bordkarte per SMS
5 Am Airport registrieren
6 Bordkarte ausgeben
7 Gepäck aufgeben
8 Sicherheitsüberprüfung
9 Boarding

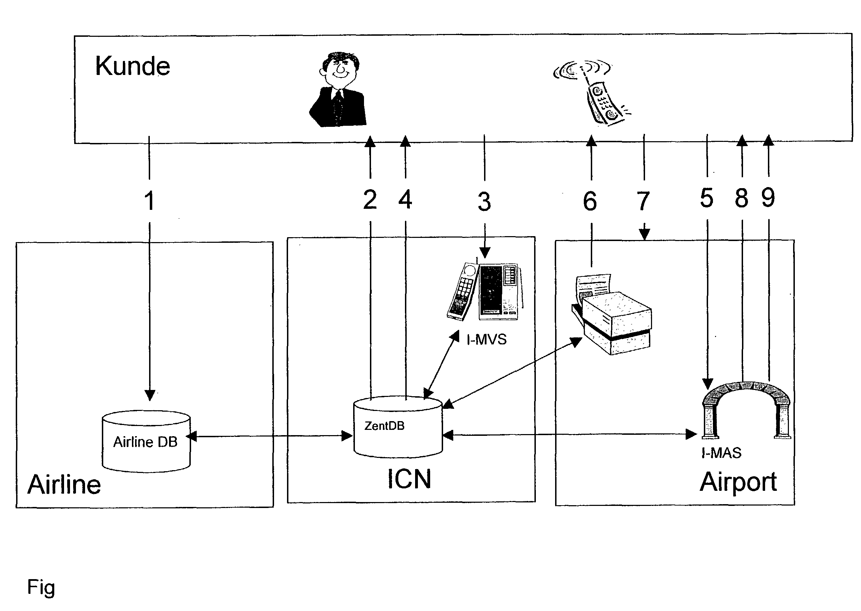

## Patentansprüche

1. Verfahren zur Identifizierung eines Reisenden bei der Wahrnahme von Reisedienstleistungen, umfassend folgende Schritte:
a) die berührungslose Erfassung der Identitätsdaten des Reisenden durch ein Lesegerät am Abreiseort,
b) die Zuordnung der Identitätsdaten zu Personendaten des Reisenden, die in einer Reisebuchungsdatenbank abgelegt sind,
c) die Wiedergabe der Personendaten des Reisenden,
d) ggf. Hinweise an den Reisenden.

2. Verfahren nach Anspruch 1, **dadurch gekennzeichnet, daß** die Wiedergabe der Per-sonendaten des Reisenden durch Wiedergabe des Namens und / oder akustisch und / oder durch Bildwiedergabe erfolgt.

3. Verfahren nach Anspruch 1 oder 2, **dadurch gekennzeichnet, daß** die Wiedergabe der Personendaten des Reisenden an Mitarbeiter des Reiseanbieters und / oder den Reisenden erfolgt.

4. Verfahren nach Anspruch 1, **dadurch gekennzeichnet, daß** nach Betreten des Abreiseortes fällige Kosten durch den Reisenden über einen über eine Mobilfunknummer erreichbares Mobile Voice System, insbesondere einen Zahlungsserver entrichtet werden.

5. Verfahren nach Anspruch 1 bis 4, wobei es sich bei der Reisedienstleistung um eine Flugreise handelt, umfassend folgende Schritte:
a) die berührungslose Erfassung der Identitätsdaten des Reisenden durch ein Lesegerät innerhalb des Flughafens,
b) die Zuordnung der Identitätsdaten zu Personendaten des Flugreisenden,
c) die Wiedergabe der Personendaten des Flugreisenden,
c1) ggf. an der Sicherheitsschleuse an das Sicherheitspersonal,
c2) ggf. an den Zoll bei Auslandsflügen / außerhalb der EU,
c3) ggf. bei der Gepäckaufgabe für die Gepäckkennzeichnung,
d) ggf. Hinweis an den Flugreisenden über die Entrichtung fälliger Kosten für Übergepäck; Entrichtung über einen Zahlungsserver,
c4) die Wiedergabe der Personendaten des Flugreisenden am Flugzeugein stieg und der Sitzplatznummer, Ausschalten des Handies,
c5) ggf. am Reisezielort die Wiedergabe der Personendaten des Flugreisen den bei der Gepäckabholung mit Überprüfung der Gepäckkennzeichnung und Zuweisung.

6. Verfahren nach Anspruch 1 bis 4, wobei es sich bei der Reisedienstleistung um eine Schiffsreise handelt, umfassend folgende Schritte:
a) die berührungslose Erfassung der Identitätsdaten des Reisenden durch ein Identitätsdaten-Lesegerät innerhalb des Hafens,
b) die Zuordnung der Identitätsdaten zu Personendaten des Schiffsreisen den,
c) die Wiedergabe der Personendaten des Schiffsreisenden,
c1) ggf. an der Sicherheitsschleuse an das Sicherheitspersonal,
c2) ggf. an den Zoll bei Auslandsschifffahrten / außerhalb der EU,
c3) ggf. bei der Gepäckaufgabe für die Gepäckkennzeichnung,
d) ggf. Hinweis an den Schiffsreisenden über die Entrichtung fälliger Kosten für Übergepäck, Entrichtung über einen Zahlungsserver,
c4) die Wiedergabe der Personendaten des Schiffsreisenden an / in der Nähe der Gang und der Kabinennummer / Sitzplatznummer,
c5) ggf. am Reisezielort die Wiedergabe der Personendaten des Schiffsrei senden bei der Gepäckabholung mit Überprüfung der Gepäckkennzeich nung und Zuweisung.

7. Verfahren nach Anspruch 1 bis 4, wobei es sich bei der Reisedienstleistung um eine Bahnreise handelt, umfassend folgende Schritte:
a) die berührungslose Erfassung der Identitätsdaten des Reisenden durch ein Identitätsdaten-Lesegerät innerhalb des Bahnhofs,
b) die Zuordnung der Identitätsdaten zu Personendaten des Bahnreisenden,
c) die Wiedergabe der Personendaten des Bahnreisenden,
c1) ggf. bei der Gepäckaufgabe für die Gepäckkennzeichnung,
d) ggf. Hinweis an den Bahnreisenden über die Entrichtung fälliger Kosten für Übergepäck; Sondergepäck; Entrichtung über einen Zahlungsserver,
c2) die Wiedergabe der Personendaten des Bahnreisenden am Zugeinstieg und der Wagennummer / Sitzplatznummer,
c3) ggf. am Reisezielort die Wiedergabe der Personendaten des Bahnreisen den bei der Gepäckabholung mit Überprüfung der Gepäckkennzeichnung und Zuweisung.

8. Verfahren nach Anspruch 1 bis 4, wobei es sich bei der Reisedienstleistung um eine Reise im öffentlichen Nahverkehr handelt, umfassend folgende Schritte:
a) die berührungslose Erfassung der Identitätsdaten des Reisenden durch ein Identitätsdaten-Lesegerät innerhalb des Nahverkehrhaltepunktes,
b) die Zuordnung der Identitätsdaten zu Personendaten des Reisenden,
c) die Wiedergabe der Personendaten des Reisenden,
c1) ggf. bei der Gepäckaufgabe für die Gepäckkennzeichnung,
d) ggf. Hinweis an den Reisenden über die Entrichtung fälliger Kosten für Übergepäck, Sondergepäck; Entrichtung über einen Zahlungsserver,
c2) die Wiedergabe der Personendaten des Reisenden am Einstieg und der Sitzplatznummer / Wagennummer,
c3) ggf. am Reisezielort die Wiedergabe der Personendaten des Reisenden bei der Gepäckabholung mit Überprüfung der Gepäckkennzeichnung und Zuweisung.

9. Verfahren nach Anspruch 1 bis 8, **dadurch gekennzeichnet, daß** die Wahrnehmung der Reisedienstleistung weiterhin vor dem Reiseantritt folgende Schritte umfaßt:
- eine Buchungsabfrage beim Reiseanbieter mittels Mobiltelefon,
- eine Antwort des Reisenden per Voice und / oder per Tastatur,
- ein Preisangebot des Reiseanbieters per Voice und / oder per Computer,
- eine Angebotsannahme durch Bestätigung des Reisenden durch Eingabe einer Geheimzahl,
- die Bestätigung der Reiseart, der Reisezeit und sonstiger Informationen zur Reise per SMS und / oder Voice,
- die Abbuchung des Reisepreises von Konto des Reisenden,
- die Einspeisung der Buchungsinformationen in eine zentrale und / oder lokale Buchungsdatenbank.
- ggf. die Übersendung der Buchungsunterlagen.

10. Verfahren nach irgendeinem der vorstehenden Ansprüche 1 bis 9, **dadurch gekennzeichnet, daß** es sich bei den Reisedienstleistungen um wenigstens eine Dienstleistung handelt, die ausgewählt ist aus der Gruppe bestehend aus Land-, Wasser- und / oder Luftreisen.

11. Verfahren nach vorstehenden Ansprüchen, **dadurch gekennzeichnet, daß** es sich um eine Einzel- und */* oder Hin- und Rückreise und */* oder Rundreisehandelt.

12. Vorrichtung, insbesondere zur Durchführung des Verfahrens nach irgendei nem der Ansprüche 1 bis 8 und 10 bis 11, enthaltend folgende Bestandteile:
- eine Identitätsdaten-Lesevorrichtung,
- die die Identitätsdaten eines Identitätsdatensenders, der vorzugsweise in / an einem Mobiltelefon angeordnet ist, berührungsfrei erfaßt,
- wobei die Lesevorrichtung mit einer Auswertevorrichtung verbunden ist, die die Identitätsdaten weiteren Daten, insbesondere einem Namen und /oder einem Bild und einer Reisebuchung zuordnet,
- wenigstens ein Datenwiedergabegerät.

13. Vorrichtung nach Anspruch 12, **dadurch gekennzeichnet, daß** die Lesevorrichtung mit den Datenwiedergabegeräten mittels Draht oder drahtlos über elektro-magnetische Wellen im Funk-, UV- oder IR-Bereich verbunden ist.

14. Vorrichtung nach Anspruch 12, **dadurch gekennzeichnet, daß** die Lesevorrichtung einen Scanner enthält.

15. Vorrichtung nach Anspruch 12, **dadurch gekennzeichnet, dass** die Lesevorrichtung mit einen aktiven und / oder passiven in einem Mobiltelefon angeordneten Sender korrespondiert, der kontinuierlich und / oder diskontinuierlich Identitätsdaten abstrahlt.

16. Vorrichtung nach Anspruch 12 , **dadurch gekennzeichnet, dass** es sich bei den Identitätsdaten um die Mobilfunknummer und / oder ein Signal auf Basis von Zahlen oder Buchstaben handelt.

17. Vorrichtung nach Anspruch 12, **dadurch gekennzeichnet, daß** die Auswertevorrichtung eine Datenbank enthält, die auf eine zentrale und / oder lokale Reisebuchungsdatenbank zugreift..

18. Vorrichtung nach Anspruch 12, **dadurch gekennzeichnet, daß** die Datenwiedergabegeräte festinstallierte oder portable LED- oder TFT-Displays und / oder Drucker enthalten.

19. Vorrichtung nach Anspruch 12, **dadurch gekennzeichnet, daß** die portablen Displays von Mitarbeitern des Reiseanbieters am Körper, vorzugsweise am Arm getragen werden.

20. Vorrichtung zur Durchführung des Verfahrens nach Anspruch 9 bis 11, enthaltend folgende Bestandteile:
- eine Identitätsdaten-Lesevorrichtung,
- einen anwählbaren zentralen und / oder lokalen Reiseanbieterserver mit einer Buchungsdatenbank,
- ein Mobiltelefon, welches Identitätsdaten aussendet und empfängt,
- und ein Mobile Voice-system.

21. Vorrichtung nach Anspruch 20, **dadurch gekennzeichnet, dass** der lokale Reiseanbieterserver am Abreiseort */* Ankunftsort und */* oder am Sitz des Reiseanbieters angeordnet ist.
